## Europäisches Patentamt

## European Patent Office

## Office européen des brevets

(19)

(11) Veröffentlichungsnummer: **0 115 817**
**B1**

(12) **EUROPÄISCHE PATENTSCHRIFT**

(45) Veröffentlichungstag der Patentschrift:
**17.09.86**

(51) Int. Cl.⁴: **C 03 C 13/06**, C 03 C 1/00

(21) Anmeldenummer: **84100745.3**

(22) Anmeldetag: **25.01.84**

(54) Verfahren zur Herstellung von Mineralwollprodukten.

(30) Priorität: **28.01.83 DK 330/83**
**17.01.84 DK 201/84**

(73) Patentinhaber: **Rockwool International A/S, 501,**
**Hovedgaden, DK-2640 Hedehusene (DK)**

(43) Veröffentlichungstag der Anmeldung:
**15.08.84 Patentblatt 84/33**

(72) Erfinder: **Hansen, Jens Kristian Gamborg,**
**Rorsangervej 14, DK-4000 Roskilde (DK)**

(45) Bekanntmachung des Hinweises auf die Patenterteilung:
**17.09.86 Patentblatt 86/38**

(74) Vertreter: **Köhne, Friedrich, Dipl.-Ing.,**
**Postfach 250265 Lothringer Strasse 81,**
**D-5000 Köln 1 (DE)**

(84) Benannte Vertragsstaaten:
**BE CH DE FR GB LI LU NL SE**

(56) Entgegenhaltungen:
**GB - A - 1 096 465**
**US - A - 2 976 162**
**US - A - 4 074 991**

**CHEMICAL ABSTRACTS, vol. 98, no. 14, April 1983, page**
**307, no. 112485s, Columbus, Ohio, USA**

## Beschreibung

Die Erfindung betrifft ein Verfahren zur Herstellung von Mineralwollprodukten, bei dem eine Mischung von Materialien einer Zusammensetzung wie Mineralwolle, darunter Abfallmaterialien von der Mineralwollherstellung, in einem Schmelzofen geführt und in eine Schmelze umgebildet wird, die zur Bildung von Mineralwolle gesponnen wird, und aus der Mineralwolle Mineralwollprodukte von gewünschter Form und Grösse hergestellt werden, und das anfallende Abfallmaterial gegebenenfalls in den Schmelzofen zurückgeführt wird.

Die Erfindung betrifft insbesondere ein Verfahren, bei dem die Speisemischung nach Vermischung mit einem Brennstoff in einem Kupolofen geschmolzen wird.

Die SE-C-205 247 beschreibt ein Verfahren zur Herstellung von Mineralwolle aus feinkörnigen Rohmaterialien. Feinkörnige Rohmaterialien sind zum Speisen von Kupolöfen ungeeignet, weil sie zusammenbacken und dadurch die Durchströmung von Luft und Rauchgasen durch die Charge des Ofens verhindern. Die Verwendung von feinkörnigen Rohmaterialien bewirkt ausserdem, dass im Ofen eine zusammenhängende Schmelze gebildet wird, während es wegen der gewünschten Durchströmung von Luft und Rauchgasen vorgezogen wird, dass ein allmähliches Abschmelzen grösserer Partikel von der Oberfläche erfolgt.

Das bekannte Verfahren versucht diese Nachteile durch die Verwendung von Briketts, die aus dem feinkörnigen Speisematerial und einem hydraulischen Bindemittel hergestellt sind, zu vermeiden. Als Beispiele von hydraulischen Bindemitteln werden in der schwedischen Patentschrift Zement, Ton und Wasserglas erwähnt.

Es hat sich in der Praxis gezeigt, dass durch Briketts, die unter Verwendung von Zement oder Wasserglas als hydraulisches Bindemittel keine befriedigende Lösung des obengenannten Problems erzielt wird, weil die Druckfestigkeit derartiger Briketts bei Temperaturen von über 500°C zu gering ist, um zu verhindern, dass sie zu Grus oder Pulver zerfallen, wobei sich das oben beschriebene ungünstige Schmelzverhalten einstellt.

Die US-A-2 576 312 erwähnt die Verwendung von plastischem Ton als Bindemittel bei der Herstellung von Briketts und führt an, dass der Ton wegen seiner chemischen und physikalischen Eigenschaften zu diesem Zweck unpraktisch ist. Die Patentschrift beschreibt gleichzeitig die Verwendung von Glaukonit als Bindemittel für den erwähnten Zweck. Glaukonit ist ein in der Natur vorkommendes Silikat mit einem geringen Gehalt an $Al_2O_3$ (3-9%), einem grossen Gehalt an Eisen (2-6% FeO und 16-22% $Fe_2O_3$) sowie an Kalium (3-8% $K_2O$) sowie an MgO und CaO in variierenden Mengen.

Die Verwendung eines Bindemittels mit einem grossen Gehalt an Eisen bewirkt, dass im Schmelzofen grossen Mengen Eisen gebildet werden, die in kurzen Abständen durch Abzapfen aus dem Ofen entfernt werden müssen.

Ausserdem setzt die Verwendung von Glaukonit voraus, dass er zu passender Feinheit zermahlen wird, nachdem er nur in fein zerkleinertem Zustand als Bindemittel verwendbar ist.

Bei der herkömmlichen Herstellung von Mineralwolle fallen verschiedene feine Abfallmaterialien an, die wegen ihrer Feinheit den Schmelzvorgang in ungünstiger Weise beeinflussen können, falls sie in den Schmelzofen zurückgeführt werden. Es handelt sich teils um die sogenannten Perlen, d.h. Schmelztropfen, die während des Spinnvorgangs nicht in Fasern umgebildet worden sind, und teils um Mineralwollreste, die beim Zuschneiden oder bei sonstiger Fertigung der gewünschten Produkte aus der im Spinnvorgang gebildeten Mineralwolle anfallen.

Beim Verfahren nach der genannten US-A-2 576 312 können die erwähnten Abfallmaterialien mit den frischen Rohmaterialien gemischt werden und unter Verwendung von Glaukonit zu Briketts geformt werden.

Der Erfindung liegt die Erkenntnis zugrunde, dass ein kalkreicher und gelbbrennender Ton, der in der Natur in reichlichen Mengen vorkommt, gegebenenfalls in Mischung mit frischen Rohmaterialien als Bindemittel für Abfallmaterialien zur Herstellung von Briketts verwendet werden kann, die eine hinreichende Festigkeit besitzen, um einen einwandfreien Schmelzvorgang bei Ofentemperaturen über 500°C sicherzustellen, ohne dass es zu der obengenannten Anhäufung von Eisen im Schmelzofen kommt.

Das erfindungsgemässe Verfahren ist dadurch gekennzeichnet, dass Briketts verwendet werden, die auf Trockenstoffgehalt gerechnet mindestens 20 Gewichtsprozent Abfallmaterialien von der Mineralwollherstellung und mindestens 35 Gewichtsprozent eines Bindemittels in der Form von Ton folgender Zusammensetzung enthalten:

| | | |
|---|---|---|
| $SiO_2$: | 50 - 70 | Gewichtsprozent |
| $Al_2O_3$: | 10 - 20 | - |
| $Fe_2O_3$: | 2 - 7 | - |
| CaO: | 5 - 30 | - |
| MgO: | 1 - 4 | - |
| $Na_2O + K_2O$: | 1 - 8 | - |

Durch das Einmischen von Abfallmaterialien von der Mineralwollherstellung in einer Menge von über 20 Gewichtsprozent und vorzugsweise in einer Menge von 20 bis 50 Gewichtsprozent in die Briketts wird der weitere Vorteil erzielt, dass die wasserhaltigen Briketts ohne nachfolgende bzw. nach einer sehr begrenzten Trocknung in den Schmelzofen eingeführt werden können. Es hat sich gezeigt, dass Briketts von der genannten Zusammensetzung bis zu 18% Wasser enthalten können. Dies ist überraschend, weil zu erwarten wäre, dass die «nassen» Briketts eine zu geringe Grundfestigkeit haben würden, um in den Ofen eingegeben werden zu können, ohne zu zerbrechen, und dass sie wegen einer starken inneren Dampfentwicklung bei der Erwärmung im Ofen bersten würden. Dass die zu erwartenden Zerstörungen nicht eintreten, ist vermutlich darauf hinzuführen, dass das Abfallmaterial eine beträchtliche Armierungswirkung hat und dass es den Briketts eine gewisse Porosität gibt und dadurch ein rasches Fortdiffundieren von Wasser ermöglicht.

Es ist ebenfalls überraschend, dass die «nassen» Briketts den Brennstoffverbrauch des Schmelzofens nicht wesentlich erhöhen. Es wird vermutet, dass dies darauf zurzckzuführen ist, dass der Wasseranteil eine Abkühlung des Bereiches über der Verbrennungszone bewirkt, wodurch der Brennstoffverbrauch gegenüber dem Brennstoffverbrauch bei normalem Ofenbetrieb herabgesetzt wird.

Durch die Verwendung von Ton als Bindemittel in den Briketts wird der weitere Vorteil erzielt, dass die Länge der Fasern vergrössert wird, und dass im Vergleich zur herkömmlichen Herstellung von Mineralrolle eine homogenere Schmelze erzielt wird.

Wie vorstehend angedeutet, können die Briketts, die Abfallmaterialien und Ton enthalten, ferner feinzerteilte frische Rohmaterialien enthalten. Die letzteren können teils als Bestandteile der Briketts und teils als gesondertes Speisematerial in den Schmelzofen geführt werden. In diesem Fall wird vorgezogen, ein einleitendes Austrennen von feinkörnigem frischem Ausgangsmaterial vorzunehmen und den verhältnismässig feinkörnigen Teil zur Herstellung von Briketts zu verwenden.

Der Ton wird vorzugsweise in einer Menge von unter 75 Gewichtsprozent verwendet.

Die Verwendung von grossen Mengen Ton in den Briketts kann zu einer verhältnismässig hohen Schmelzviskosität führen. Diese kann durch Zugabe von viskositätsherabsetzenden Stoffen, wie Kalk, Dolomit oder Schlacke, kompensiert werden. Bei der Verwendung von Ton mit verhältnismässig grossem Gehalt an Kalk kann auf die Zugabe von viskositätsherabsetzenden Stoffen ganz oder teilweise verzichtet werden.

In der Natur kommt stark kalkhaltiger Ton oft als eine unter dem gewöhnlicheren gelbbrennenden Ton liegende Ablagerung vor. Der stark kalkhaltige Ton ist nicht verwendbar in der Ziegelsteinindustrie und ist deshalb ein verhältnismässig billiges Rohmaterial.

Die plastischen Eigenschaften des Tons gestatten das Einführen einer langen Reihe von weiteren Stoffen in die Briketts. So können zusätzlich zu den vorstehend genannten feinkörnigen Rohstoffen, z.B. in der Form von zerteilten Stein- und Schlackenprodukten, eine lange Reihe Zusatzstoffe, wie Additive zur Erhöhung der Feuerfestigkeit der Mineralwollprodukte, Brennstoffstaub zur Herabsetzung der Brennstoffmenge der Ofencharge, sowie Additive in Form von Flugasche oder Elektrofilterstaub zur Einstellung der Zusammensetzung der Schmelze zugesetzt werden.

Die verwendeten tonhaltigen Briketts können durch mehrere an sich bekannte Verfahren zur Herstellung von Ziegelsteinerzeugnissen hergestellt werden. So können sie z.B. durch Walzpressen oder Extrudieren einer Materialmischung hergestellt werden, die 6 bis 30% vorzugsweise 10 bis 18% Wasser enthält. Im Falle des Extrusionsverfahrens können mit passender Extrudierdüse Briketts mit durchgehenden Kanälen hergestellt werden. Dadurch wird eine Vergrösserung der Oberfläche und damit eine Änderung des Schmelzvorgangs im Schmelzofen erzielt. Ferner wird durch solche Kanäle die Gefahr verringert, dass die Briketts bersten, wenn das Wasser der Briketts bei der Erwärmung verdampft.

Der Gehalt der Briketts an Abfallmaterialien von der Mineralwollherstellung geben wie erwähnt den Briketts eine gewisse Porosität. Diese Porosität kann, falls erwünscht, dadurch erhöht werden, dass in die Briketts andere feingeteilte oder faserartige Stoffe, wie Sägemehl, Holzschnitzel, Cellulosefasern, darunter Papierabfälle und Holzfasern, Textilabfälle, Plastabfälle, Torfgrus und Braunkohle eingeführt werden.

Unter dem Ausdruck «Briketts» sind hier regelmässig geformte Körper von solchen Abmessungen zu verstehen, dass sie nach einer etwaigen Trocknung ein Gewicht von über 300 g und typisch ein Gewicht von 1 kg haben. Eine bevorzugte Form sind zylindrische Körper mit einem Durchmesser von 6 bis 10 cm und einer Länge von 8 bis 12 cm.

Die Erfindung wird näher anhand des folgenden Beispieles beleuchtet:

*Beispiel*

Gelbbrennender Ton von folgender Zusammensetzung auf glühverlustfreier Basis:

| | | |
|---|---|---|
| $SiO_2$: | 60 Gewichtsprozent | |
| $Al_2O_3$: | 12 | - |
| $Fe_2O_3$: | 5 | - |
| CaO: | 18 | - |
| MgO: | 2 | - |
| $Na_2O + K_2O$: | 3 | - |

wurde mit den untenstehenden Bestandteilen in folgenden Mengen gemischt:

| | | |
|---|---|---|
| Ton | 60 Gewichtsprozent | |
| Abfallmaterial von der Mineralwoll-herstellung | 20 | - |
| Kalk | 5 | - |
| Elektrofilterstaub | 5 | - |
| Koksstaub | 5 | - |
| Zerteilt Diabas | 2 | - |
| Olivin | 3 | - |
| insgesamt | 100 Gewichtsprozent | |

Zur Einstellung des Wassergehalts auf 15% wurde Wasser zu der Mischung zugegeben, und aus der somit gebildeten Mischung wurden durch Extrudieren zylindrische Briketts mit einem Durchmesser von 8 cm und einer Länge von 10 cm hergestellt. Die hergestellten Briketts wurden ohne Trocknung zusammen mit festem Brennstoff in Form von Giessereizindern in den Schmelzofen eingeführt. Es wurden etwa 13% Brennstoff und etwa 87% Tonbriketts verwendet.

Die hergestellte Schmelze wurde zu Mineralwolle mit einer befriedigenden Farbe und Zusammensetzung gesponnen.

**Patentansprüche**

1. Verfahren zur Herstellung von Mineralwollprodukten, bei dem eine Mischung von Materialien einer Zusammensetzung wie Mineralwolle, darunter Abfallmaterialien von der Mineralwollherstellung, mit einem unorganischen Bindemittel und Wasser zu Briketts geformt wird, und die so gebildeten Briketts in einen Schmelzofen geführt und in eine Schmelze umgebildet werden, die zur Bildung von Mineralwolle gesponnen wird, und aus der Mineralwolle Mineralwollprodukte von gewünschter Form und Grösse hergestellt werden, und das anfallende Abfallmaterial gegebenenfalls in den Schmelzofen zurückgeführt wird, dadurch gekennzeichnet, dass Briketts verwendet werden, die auf Trockenstoffgehalt gerechnet mindestens 20 Gewichtsprozent Abfallmaterialien von der Mineralwollherstellung und mindestens 35 Gewichtsprozent eines Bindemittels in Form von Ton folgender Zusammensetzung enthalten:

| | | |
|---|---|---|
| $SiO_2$: | 50 - 70 Gewichtsprozent | |
| $Al_2O_3$: | 10 - 20 | - |
| $Fe_2O_3$: | 2 - 7 | - |
| CaO: | 5 - 30 | - |
| MgO: | 1 - 4 | - |
| $Na_2O + K_2O$: | 1 - 8 | - |

2. Verfahren nach Anspruch 1, dadurch gekennzeichnet, dass das Abfallmaterial in einer Menge von 20 bis 50 Gewichtsprozent verwendet wird.

3. Verfahren nach Anspruch 1, dadurch gekennzeichnet, dass der Ton in einer Menge von 35 bis 75 Gewichtsprozent verwendet wird.

4. Verfahren nach Anspruch 1, dadurch gekennzeichnet, dass Briketts mit einem Wassergehalt von 10 bis 18 Gewichtsprozent verwendet werden.

5. Verfahren nach Anspruch 1, dadurch gekennzeichnet, dass Briketts verwendet werden, die zusätzlich zu Abfallmaterialien, Ton und gegebenenfalls Wasser auch feinkörniges frisches Ausgangsmaterial für die Herstellung von Mineralwolle enthalten.

6. Verfahren nach Anspruch 1, dadurch gekennzeichnet, dass Briketts verwendet werden, die zusätzlich zum Abfallmaterial, Ton und gegebenenfalls Wasser auch ein oder mehrere Zusatzmittel zur Verbesserung der Eigenschaften der Mineralwolle oder zur Verbesserung der Zusammensetzung der Schmelze oder Mittel zur Erhöhung der Porosität der Briketts vor oder während des Schmelzens enthalten.

**Claims**

1. A process for the production of mineral wool products comprising moulding a mixture of materials having a composition like that of mineral wool, including waste materials from the production of mineral wool, together with binder and water to form briquettes and introducing the briquettes thus formed into a melting furnace and converting them into a melt which is spun to form mineral wool and preparing from the mineral wool mineral wool products of a desired shape and size, and optionally recycling waste material formed to the melting furnace characterized in using briquettes which based on dry matter contain at least 20% by weight of waste materials from mineral wool production and at least 35% by weight of a binder in the form of clay of the following composition:

| | | |
|---|---|---|
| $SiO_2$: | 50 - 70% by weight | |
| $Al_2O_3$: | 10 - 20 | - |
| $Fe_2O_3$: | 2 - 7 | - |
| CaO: | 5 - 30 | - |
| MgO: | 1 - 4 | - |
| $Na_2O + K_2O$: | 1 - 8 | - |

2. A process according to claim 1, characterized in using the waste material in an amount ranging from 20 to 50% by weight.

3. A process according to claim 1, characterized in using the clay in an amount ranging from 35 to 75% by weight.

4. A process according to claim 1, characterized in using briquettes having a water content ranging from 10 to 18% by weight.

5. A process according to claim 1, characterized in using briquettes which in addition to waste materials, clay, and optionally water contain a finely divided fresh starting material for the production of mineral wool.

6. A process according to claim 1, characterized in using briquettes which in addition to waste materials, clay, and optionally water contain one or more additives for improving the properties of mineral wool or for improving the composition of the melt, or an additive for increasing the porosity of the briquettes before or during the melting operation.

**Revendications**

1. Procédé de fabrication de produits de laine minérale, consistant à prendre un mélange de matériaux d'une composition analogue à celle de la laine minérale, et notamment des déchets de fabrication de la laine minérale, pour les mouler en briquettes avec un liant non organique et de l'eau, puis à faire passer les briquettes ainsi réalisées dans un four de fusion pour obtenir une masse en fusion dont on tire de la laine minérale par filage, après quoi on confectionne des produits en laine minérale ayant la forme et la taille voulues à partir de cette laine minérale, en renvoyant au besoin les déchets corredondants dans le four de fusion, caractérisé en ce qu'on utilise des briquettes ayant à sec une teneur pondérale d'au moins 20% en déchets provenant de la fabrication de la laine minérale, et une teneur pondérale d'au moins 35% en un linant constitué par une argile ayant la composition pondérale ci-après:

| | | |
|---|---|---|
| $SiO_2$ | 50 à 70% | |
| $Al_2O_3$ | 10 à 29% | |
| $Fe_2O_3$ | 2 à 7% | |
| CaO | 5 à 30% | |
| MgO | 1 à 4% | |
| $Na_2O + K_2O$ | 1 à 8% | |

2. Procédé conforme à la revendication 1, caractérisé en ce qu'on utilise les matériaux de déchet dans une proportion pondérale de 20 à 50%.

3. Procédé conforme à la revendication 1, caractérisé en ce qu'on utilise l'argile dans une porportion pondérale de 35 à 75%.

4. Procédé conforme à la revendication 1, caractérisé en ce qu'on utilise des briquettes ayant une teneur pondérale en eau comprise entre 10 et 18%.

5. Procédé conforme à la revendication 1, caractérisé en ce qu'on utilise des briquettes qui, en plus des matériaux de déchet, de l'argile et éventuellement de l'eau, contiennent également des grains de petit calibre d'une matière neuve de base pour la fabrication de la laine minérale.

6. Procédé conforme à la revendication 1, caractérisé en ce qu'on utilise des briquettes qui, en plus des matériaux de déchet, de l'argile et éventuellement de l'eau, contiennent en outre au moins un agent additif servant à améliorer les qualités de la laine minérale, ou à améliorer la composition de la masse en fusion, ou des agents servant à augmenter la porosité des briquettes avant ou pendant la fusion.